# EUROPEAN PATENT APPLICATION

(11) **EP 4 851 115 A1**
(43) Date of publication of application: **09.12.2026**
(21) Application number: 25180492.8
(22) Date of filing: 03.06.2025
(51) Int. Cl.: C01G 53/506, H01M 4/525

(54) **METHOD FOR PREPARING A CATHODE ACTIVE MATERIAL FOR LI-ION SECONDARY BATTERIES**

(71) Applicant: Umicore, 1000 Brussels (BE)
(72) Inventor: KIM, Dae-Hyun, 331-200 Cheonan (KR); AHN, JunSeo, 331-200 Cheonan (KR); HA, JaeAu, 331-200 Cheonan (KR)
(74) Representative: Umicore RDI Patent Department

(57) **Abstract**

A method for manufacturing a cathode active material powder having a composition comprising Li, O, M, wherein M includes Ni, Mn, and Co, the method having:
- a first step of mixing a Li source and a K source with a first source of Ni, a second source of Co, and a third source of Mn, thereby obtaining a mixture powder,
- a second step of heat treating the mixture powder at a first temperature of at most 830°C, thereby obtaining a first fired material, and
- a third step of milling the first fired material.

## Description

### TECHNICAL FIELD

The present disclosure relates to a process for manufacturing the a cathode active material CAM (hereafter referred to as CAM) powder comprising lithium (Li), nickel (Ni), manganese (Mn) and cobalt (Co). Such a CAM powder is also referred hereunder as NMC (NiMnCo) CAM powder. The terms "CAM powder" and "CAM" can be used interchangeably.

The term "comprising", as used herein and in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a composition comprising components A and B" should not be limited to compositions consisting only of components A and B. It means that with respect to the present disclosure, the only relevant components of the composition are A and B. Accordingly, the terms "comprising" and "including" encompass the more restrictive terms "consisting essentially of" and "consisting of".

The term "a cathode active material" as used herein and claimed is defined as a material which is electrochemically active in a positive electrode or cathode. By active material, it must be understood to be a material capable of capturing and releasing Li ions when subjected to a voltage change over a predetermined period of time. The NMC CAM according to the present disclosure is suitable to be used in Li-ion secondary batteries (hereafter referred to as LIBs).

In particular, the present disclosure relates to a NMC CAM containing a high content of Ni, hereafter referred as hNMC. For instance, a hNMC CAM comprises a Ni/(Ni+Mn+Co) ratio more than 60.0 at% (e.g., NMC622) or of at least 80.0 at% (e.g., NMC811). In the present disclosure, "at%" signifies atomic percentage. The at% or "atomic percent" of a given element means a percentage of atoms of said element among all atoms in a claimed composition. at% can be measured by inductively coupled plasma - optical emission spectrometry (hereafter referred to as ICP-OES). Moreover, 80.0 at% of Ni is equivalent to 0.80 mole.

### BACKGROUND

Along with the developments of EVs and HEVs, it comes a demand for LIBs eligible for such applications and hNMC CAMs are widely used materials therein, because of their high mass or volumetric energy density, and their higher (discharge) capacities at higher operating voltages.

In particular, this disclosure concerns a process for manufacturing a hNMC CAM powder comprising :
i. single particles; or
ii. (standalone) secondary particles including at least two primary particles and at most twenty primary particles. Optionally, each of the standalone particles include at least two primary particles and at most twenty primary particles; or
iii. single and secondary standalone particles.

In the context of the present disclosure, single particles can be distinguished from each other in a SEM image, by observing absence of grain boundaries therein. The terms "grain boundary" is present in a secondary particle including at least two primary particles.

A grain boundary can be defined as an interface between two primary particles, for instance wherein atomic planes of each of the two particles are aligned to different orientations and meet at the grain boundary as a crystalline discontinuity. A grain boundary starts at a first edge of a primary particle and ends at a second edge of a second primary particle adjacent to the first primary particle.

Therefore, a particle having no grain boundary or a grain boundary free particle can be categorized as single particle, contrary to a secondary particle that will inherently have at least one grain boundary.

A method for making a CAM powder as described above is known, for instance from WO2019/185349 (hereafter referred to as WO'349) that contemplates a method for preparing a CAM powder comprising single crystal monolithic particles (according to terminology disclosed in WO'349). The CAM powder manufactured according to the process of WO'349 has a D50 of at least 2 µm and at most 8 µm.

The method disclosed in WO'349 includes three successive heat treatment steps. More specifically, it comprises :
- **Process A:** preparation of a hNMC agglomerated intermediate according to a double sintering process that is disclosed in patent application EP17159083.9, i.e., a solid state reaction between a Li source and a mixed transition metal precursor, referred hereafter to as MTH (mixed transition metal hydroxide)
   o **A1) Co-precipitation:** a MTH having a composition of Ni_{0.625}Mn_{0.175}Co_{0.200}(OH)_{0.157} is prepared by a process described in KR101547972B1. The MTH has the D50 of around 4 µm.
   ∘ **A2) 1^{st} blending:** to obtain a lithium deficient sintered precursor, LiOH-H₂O and the MTH are homogenously blended with a Li/M' ratio of 0.90 in a Henschel mixer for 30 minutes, wherein M' = Ni+Mn+Co.
   ∘ **A3) 1^{st} sintering** : the blend from the 1^{st} blending step is sintered at 700°C for 10 hours under O₂ atmosphere in a chamber furnace. The product obtained from this step is a powderous lithium deficient sintered precursor with Li/M'= 0.90.
   ∘ **A4) 2^{nd} blending:** the lithium deficient sintered precursor is blended with LiOH-H₂O in order to correct the Li stoichiometry to Li/M'= 1.01. The blending is performed in a Henschel mixer for 30 minutes.
   ∘ **A5) 2^{nd} sintering:** the blend from the 2^{nd} blending is sintered at 930°C for 12 hours in an oxygen containing atmosphere in a chamber furnace. The sintered blocks are crushed by a jaw crushing equipment.
- **Process B:** preparation of a hNMC with monolithic morphology
   ∘ **B1) 1^{st} milling:** the crushed large agglomerated compound (from step A5) is milled by an air classifying milling equipment to prepare the agglomerated intermediate high Ni NMC.
   ∘ **B2) 2^{nd} milling - wet ball milling** : To separate the obtained agglomerated intermediate particles into monolithic primary particles, a wet ball milling process is applied. 1kg of the agglomerated intermediate high Ni NMC is put in a 5L vessel (diameter= 16.5cm) with 1L deionized water and 10mm Zr0₂ balls with a filling ratio of 25% of the volume of the vessel. The vessel is rotated on a commercial ball mill equipment which has rollers having a diameter of 6cm at 50RPM for 15 hours. The calculated milling speed is around 16cm/s.
   o **B3) Filtering and drying:** the wet milled solid powder is separated from water by using a Buchner filter. The filtered wet milled compound is dried at 80°C in a conventional oven with dry air to obtain a dried monolithic hNMC.
- **Process C:** preparation of healed final monolithic hNMC
   ∘ **C1) 3^{rd} blending** : the compound from B3) is blended with 5.5mol% of LiOH-H₂O (vs. M' in the compound from B2) to compensate for Li losses during the wet-milling, and 5.0mol% of nano cobalt nitrate (vs. M' in the compound from B2). The blending is performed in a blending equipment called Eirich mixer for 1 minute.
   ∘ **C2) Healing firing (3^{rd} sintering):** the blend from C1) is heated at 750°C for 10 hours under oxygen containing atmosphere in a chamber furnace. The sintered compound is sieved to obtain the final monolithic hNMC.

As mentioned above, the method according to WO'349 has several synthesis steps, including three heat treatment steps and a co-precipitation step to manufacture the MTH precursor.

Therefore, the method of the prior art bears a relatively high operating expense (hereafter referred to as OPEX).

It is therefore an object of the present disclosure to provide a method which bears less OPEX. Moreover, the method of the present disclosure allows to achieve CAM powder having optimized physicochemical parameters to improve performances of a battery using the CAM powder obtained from the method of the disclosure.

### SUMMARY OF THE DISCLOSURE

This first object is achieved by providing a method according to claim 1. The method for manufacturing a CAM powder including Li, O and M, wherein M comprises more than 60.0 at% of Ni relative to M, comprising:
- a first step of mixing a Li source and a K source with at least two of a first source of Ni, a second source of Co, and a third source of Mn, thereby obtaining a first mixture powder comprising K in a content of at least 0.50 at% and of at most 15.00 at% relative to the sum of Li, M, and K,
- a second step of heat treating the first mixture powder optionally under oxidizing atmosphere, at a first temperature of at most 830°C, thereby obtaining a first fired material, and
- a third step of milling the first fired material to obtain the cathode active material powder.
The first, second and third source are individual sources.

It is indeed observed that the method of claim 1 allows to achieve a CAM powder having relatively high average primary particle size (D_{SEM}) and D50 value of at least 3.5 µm (preferably of at least 4.0 µm), respectively, and optionally relatively narrow span (of no more than 1.10), whilst retaining relatively low cation mixing (of "Ni atoms on Li sites") as supported by the results provided in Table 2.

D_{SEM} is controlled by adjusting the first temperature value of the second step. In the process of the prior art, a relatively high 2^{nd} sintering temperature (i.e. more than 830°C) is required to prepare a positive electrode active material having relatively high average primary particle size. However, a high sintering temperature generally leads to a relatively high cation mixing (in a crystal structure) of a positive electrode active material such as high amount of Ni atoms on Li sites: the so-called "Ni on Li" cation mixing. It is well known that a higher amount of Ni atoms on Li sites causes a decrease of a capacity in a battery using a CAM powder with such defect.

The method of the present disclosure has the advantage to achieve a CAM powder exhibiting desired high D50 and D_{SEM} values along with a low span value (of no more than 1.10) whilst retaining the cation mixing at a lower value of no more than 2.5 %, preferably of less than 2.0%. Particularly, the method of the disclosure allows to achieve CAM powder with:
- a D50/D_{SEm} ratio of at least 1.00 and at most 2.00,
- a span of at most 1.10,
- a D50 of at least 3.50 µm (and optionally of no more than 5.0 µm), and
- a cation mixing of no more than 2.5%, or of at most 2.0%.

D50/D_{SEM} ratio parameter is an indicator of the particles morphology. A ratio of 1.00 means that the CAM powder is constituted of single particles. A ration of more than 1.00 means that the CAM powder includes at least a fraction of secondary particles according to the disclosure, i.e. comprising at least two and at most twenty primary particles. Particularly, a CAM powder with D50/D_{SEM} ratio of more than 1.00 has either:
A. Secondary particles as mentioned above, or
B. A combination of a first volumetric or mass fraction of single particles and a second volumetric or mass fraction of secondary particles,
wherein each of the secondary particles comprises at least two and at most twenty primary particles.

Less grain boundaries (or primary particles) in a particle can be beneficial because less particle breaking will take place in the material upon cycling of a battery comprising the material. Cycle life of a battery including a CAM powder having a D50/D_{SEM} ratio value of no more than 2.00 is preferred and a battery having such a CAM powder in the positive electrode may exhibits superior cycle life compared to a battery including a positive electrode encompassing a CAM powder having a ratio > 2.00.

D50 of at least 3.50 µm (and optionally of no more than 5.0 µm) provides an optimized range. A CAM powder with a D50 value included in this range will deliver acceptable capacity and superior cycle life when used in a battery.

A span value of no more than 1.10 means a more uniform CAM particles size. This is advantageous in that it facilitates the manufacture of positive electrodes including this CAM.

The method according to the disclosure is a MTH free method, i.e. contrary to what the state of the art teaches, the method of the disclosure does not use a mixed transition metal hydroxide (Ni_{1-x-y}MnₓCo_{y}Oₐ(OH)₂₋ₐ, wherein for instance: 0 ≤ a ≤ 2, and 0 ≤ x < 1 and 0 < y ≤ 1 or: 0 ≤ a ≤ 2, and 0 < x ≤ 1 and 0 ≤ y < 1) obtained from a co-precipitation process.

Instead, the method of the disclosure uses a mixture of a Ni compound, a Mn compound, and a Co compound as distinctive sources of Ni, Mn and Co. This MTH free CAM powder synthesis route has several advantages:
i) it confers flexibility in the CAM design, because in a MTH free CAM powder synthesis, a step of synthetizing a precursor of the CAM is skipped,
ii) it is an eco-friendly method due to less by-products like Na sulfates, and, because of i) and ii),
iii) the synthesis route of the disclosure is also a cheaper method (compared to the state of the art one).

Moreover, the method according to disclosure allows to achieve a hNMC CAM powder having with only one heating treatment step at lower T°C (for instance at maximum 830°C whereas process of the prior art employs a sintering T°C which maximal value if above 900°C), and for this reason, is also less costly.

The present disclosure includes the following aspects:

### Method

Optionally, the source of Ni is Ni(OH)₂ or NiO. The source of Mn can be any of: MnO, MnO(OH), Mn₂O₃, Mn₃O₄, or MnO₂, or a combination thereof.

The source of potassium (K) can be KOH. The content of K can be of at least 0.70 at%, or of at least 1.50 at%, or of at least 2.00 at%, or of at least 2.50 at%. The content of K can be of at most 10.0 at%, relative to the sum of Li, K, and M.

The lithium (Li) source can be LiOH.

Optionally, the mixture includes Ni and Mn.

Optionally, the mixture includes Ni and Co.

Optionally, the mixture includes Ni, Mn, and Co.

Particularly, the method of the disclosure is a mixed transition metal compound precursor free method. The mixed transition metal compound precursor comprises at least two of : Ni, Mn, and Co elements. The mixed transition metal compound is an oxide, a hydroxide or an oxy-hydroxide of at least two of Ni, Mn, and Co.

Optionally, the first step includes adding a fourth source of D to the mixture.

The second step can be conducted with a first temperature of at least 600°C, or at least 650°C, or at least 700°C.

The second step can be conducted during a period of time of at least 2.0 hours and of no longer than 15.0 hours.

The third milling step aims at separating agglomerated primary particles of the first fired material into at least one of : single particles, (standalone) secondary particles including at least two primary particles and at most twenty primary particles, or a combination thereof.

This third step of milling the first fired material can be performed by ultrasonication. A way to perform ultrasonication is to add the fired material into an ultrasonic homogenizer vessel together with a solvent, for instance an aqueous solution, water, or distilled water.

Alternatively, the third milling step can be conducted by wet ball milling wherein Zr beads and water-based solvent are used.

Subsequently to the fourth step of method may include an additional step of contacting the cathode active material powder with a washing solution that can be an aqueous solution or with water, or even with distilled water, followed by drying at a second temperature of at least 100°C and at most 350°C, thereby obtaining a washed cathode active material powder. During this fourth step, surface of each particle of the cathode active material powder are put into contact with the washing solution, thereby dissolving LiOH and/or Li₂CO₃ (also called soluble bases - SB) and reducing SB content of the cathode active material powder obtained from the third step.

### CAM powder from the method

The cathode active material powder obtained by the method of the disclosure may comprise :
- Ni in a content x, wherein 60.0 at% ≤ x ≤ 95.0 at%, or 80.0 at% ≤ x ≤ 95.0 at%, or 80.0 at% ≤ x ≤ 90.0 at%, relative to M,
- Mn in a content y, wherein 0.0 at% ≤ y ≤ 20.0 at%, relative to M,
- Co in a content z, wherein 0.0 at% ≤ z ≤ 15.0 at%, relative to M,
- D in a content a, wherein 0.0 at% ≤ a ≤ 5.0 at%, relative to M,
wherein D is an element different than Ni, Mn, and Co and wherein: x+y+z+a is 100.0 at% as determined by ICP-OES.

D can be at least one of: Zr, W, Sb, Sr, Ce, Y, Al, B, Ti, Nb, Ca, and Si.

Optionally, 80.0 at% ≤ x ≤ 90.0 at%, and 0.0 at% ≤ y ≤ 10.0 at%, and 0.0 at% ≤ z ≤ 5.0 at%, and 0.0 at% ≤ a ≤ 5.0 at%.

Moreover, the cathode active material powder may include Ni in a content x of at least 80.0 at% and may have:
- a D50/D_{SEM} ratio of at least 1.00 and at most 2.00, and
- a span of at most 1.10,
- a D50 of at least 3.50 µm, or of at least 4.00 µm, or even of at least 4.05 µm, and
- a cation mixing of no more than 2.5%, or of at most 2.0%, or of less than 2.0%.

The cathode active material powder may have a D_{SEM} of at least 2.50 µm, and optionally of at most 5.00 µm, or of at most 4.50 µm.

The cathode active material obtained from the process of the disclosure may have a layered structure. For instance, a layered structure of the α-NaFeO₂ type, or a layered structure of the α-NaFeO₂ type having a R-3m space group.

Various aspects according to the present disclosure are provided in the claims well as in the specification. The aspects and examples recited in the claims and in the specification are mutually freely combinable unless otherwise explicitly stated.

### BRIEF DESCRIPTION OF THE FIGURES

Figure 1 provides a SEM image of cathode active material powder particles according to EX1.
Figure 2 provides D_{SEM} (in µm) and cation mixing (in %) values for CEXs and EXs.

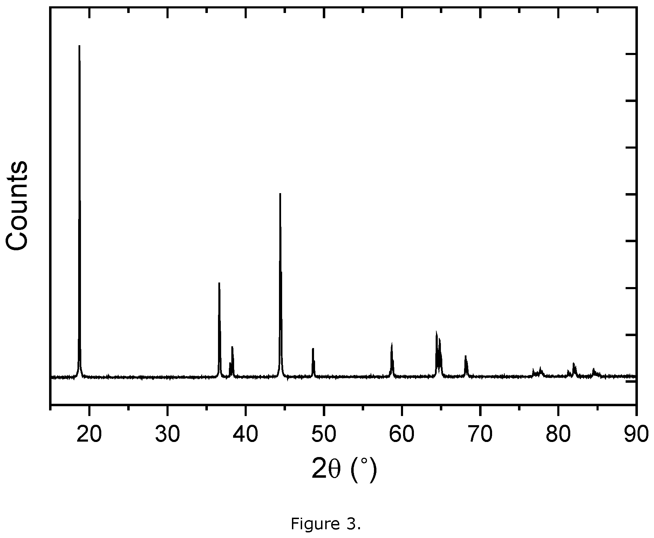

Figure 3 provides the XRD pattern of EX1.

### DETAILED DESCRIPTION OF THE DISCLOSURE

### EXPERIMENTAL ANALYSIS USED IN THE EXAMPLES AND THE COMPARATIVE EXAMPLE

The following analysis methods are used in the Examples and the Comparative Examples.

### A) Particle size distribution (PSD) analysis

The particle size distribution (hereafter referred to as PSD) of the cathode active material is measured by laser diffraction particle size analysis using a Malvern Mastersizer 3000 with a Hydro MV wet dispersion accessory after having dispersed each of the powder samples in an aqueous medium. In order to improve the dispersion of the powder, sufficient ultrasonic irradiation and stirring are applied, and an appropriate surfactant is introduced. of the positive electrode active material is measured by laser scattering method using a Malvern Mastersizer 3000 with a Hydro MV wet dispersion accessory after having dispersed each of the powder samples in an aqueous medium. In order to improve the dispersion of the powder, sufficient ultrasonic irradiation and stirring are applied, and an appropriate surfactant is introduced. PSD may be represented by D99/D50 or span=(D90-D10)/D50, where D10, D50, D90 and D99 are defined as the particle size at 10%, 50%, 90% and 99% of the cumulative volume% distributions, respectively, obtained from the Malvern Mastersizer 3000 with Hydro MV measurements.

### B) Primary particle size analysis (SEM analysis)

A positive electrode active material comprises primary particles and secondary particles comprising primary particles. An average primary particle size of the positive electrode active material is measured by a conventional image analysis technique using the ImageJ software after having an SEM (Scanning Electron Microscopy) image of the positive electrode active material.

The diameter of primary particles or single particles is calculated by using ImageJ software (ImageJ 1.52a, National Institutes of Health, USA) according to a protocol comprising:
- a step 1) consisting of opening a file containing SEM image of a cathode active material standalone (secondary) particle obtained according to FE-SEM measurement method mentioned in section B) with 5000 times magnification wherein the image is taken to contain at least 30 primary particles,
- a step 2) consisting of setting a scale according to the above-mentioned SEM magnification, and
- a step 3) consisting of drawing a line following primary particle's edge using 'polygon selections' tool for at least 30 primary particles that are not overlapped with other primary particles, thereby obtaining dawn primary particles perimeter based on a polygon approach from aforementioned 'polygon selections' tool. The primary particles at the edges of the SEM image must be excluded if they are truncated,
- a step 4) consisting of picking the 'Area' box tool from 'Set Measurements' menu, and measuring an area associated to each of the drawn primary particle perimeters.
- a step 5) consisting of calculating a diameter d of each measured areas (associated to the primary particles) by assuming that each of the particles has a spherical shape, with $d = 2 \times \sqrt{\frac{area}{π}}$, thereby obtaining an average primary particles diameter, also referred to as average primary particle size - D_{SEM} (measured in µm) for at least 30 particles.

### C) X-ray diffraction

### a. X-ray diffraction pattern collection

The X-ray diffraction (XRD) pattern of the positive electrode active material is collected with a Rigaku X-Ray Diffractometer (Ultima IV) using a Cu Ka radiation source (40kV, 40mA) emitting at a wavelength of 1.5418 Å. The instrument configuration is set at: a 1° Soller slit (SS), a 10 mm divergent height limiting slit (DHLS), a 1° divergence slit (DS) and a 0.3 mm reception slit (RS). The diameter of the goniometer is 158 mm. XRD patterns are obtained in the range of 15 - 90° (2θ) with a scan speed of 1° per min and a step-size of 0.02° per scan.

### b. Cation mixing %

The cation mixing of "Ni on Li" (%) is obtained from Rietveld refinement analysis results of the XRD pattern using Rietveld analysis software TOPAS (manufactured by Bruker AXS). The refinement follows the following protocol :
- **Step 1)** A reference a-NaFeO₂-type layered structure (space group R-3m) is loaded into a blank TOPAS file (*.pro) as an initial structure model. The structure reference/model has below initial parameters that are to be refined:
   - **Lattice (a) :** 2.86 Å
   - **Lattice (c) :** 14.25 Å
   - **Crystal Size (L)** : 185 nm
   - **Strain (G)** : 0.18

The structure model has atoms in different sites as shown in Table 1. The thermal parameters (B_{eq}.) of all atoms are 1.

In Table 1, occupancies of Li⁺¹ and Ni⁺² as well as z value of O site are the parameters to be refined.

**Table 1. Sites information of the initial structure model**

| Site | Position nb (Np) | x | y | z | Atom | Occupancy |
|---|---|---|---|---|---|---|
| Li1 | 3 | 0.0000 | 0.0000 | 0.0000 | Li⁺¹ | = 100% - n |
| Li1 | 3 | 0.0000 | 0.0000 | 0.0000 | Ni⁺² | = n |
| M1 | 3 | 0.0000 | 0.0000 | 0.5000 | Ni⁺² | = (100% - k)/3 |
| M1 | 3 | 0.0000 | 0.0000 | 0.5000 | Co⁺³ | = (100% - k)/3 |
| M1 | 3 | 0.0000 | 0.0000 | 0.5000 | Mn⁺⁴ | = (100% - k)/3 |
| M1 | 3 | 0.0000 | 0.0000 | 0.5000 | Li⁺¹ | = k |
| O | 6 | 0.0000 | 0.0000 | 0.2500 | O⁻² | 100% |

In Table 1, k is the % of Li atoms with a +1 valence (Li⁺¹) located on M1 sites, wherein M1 includes Mn (Mn⁺⁴), Co (Co⁺³), and Ni, and n is the % of Ni atoms with a +2 valence (Ni⁺²) located on Li1 site.
- **Step 2)** A XRD pattern obtained according to the method of Section C) a. is loaded into the TOPAS file created in **Step 1)** using the "replace scan data" function.
- **Step 3)** The Rietveld refinement of the XRD pattern of **Step 2)** is executed by pressing the "Run" button in the TOPAS software. This step is repeated (at least) twice in order to obtain the refined structure parameters including Ni atoms on Li sites (Ni on Li (%)), which is the occupancy "n". Therefore, the refined structure parameters are related to the XRD pattern.

In the present disclosure, n (in %) = [(N - N_{Li1})/N]x100, wherein N is the relative total number of Li atoms (N=1.00) and N_{Li1} is the number of Li on Li1 site. If N_{Li1} < N, then a predetermined degree of Ni cation mixing (Ni on Li1 site) is present in the CAM.

Alternatively, k (in %) = [(K - K_{M1})/K]x100, wherein K is the relative total number of Ni, Mn, and Co atoms (K = 1.00) and K_{M1} is the number of any of Ni, Mn, and Co on Li1 site. If K_{M1} < K, then a predetermined degree of Li cation mixing (Li on M1 site) is present in the CAM.

Jingxi Li et al. provides a comprehensive review of the cation mixing in layered cathode active materials in the article : Nano Materials Science Volume 5, Issue 4, 2023, pages 404-420. According to Li, the integrated peak intensity ratio between 003 and 104 reflections from an obtained XRD pattern can be used as an indicator for the occurrence of the cation mixing.

### EXAMPLES

The present disclosure is further illustrated in the following examples and comparative examples.

### Comparative Example 1 (CEX1)

A positive electrode active material powder CEX1 was obtained through the following steps:
**1) Mixing** : nickel hydroxide powder, manganese oxide powder, and cobalt oxide powder were mixed with LiOH homogeneously to prepare a mixture having a Li/(Ni+Mn+Co) atomic ratio of 1.02, a Ni/(Ni+Mn+Co) atomic ratio of 0.90, a Mn/(Ni+Mn+Co) atomic ratio of 0.05, and a Co/(Ni+Mn+Co) atomic ratio of 0.05.
**2) Heating** : The mixture from Step 2) was heated at 850°C for 10 hours under an oxygen atmosphere, followed by a grinding and sieving with a 270 mesh (according to the US standard mesh size) to prepare a heated material.
**3) De-agglomerating** : the heated material comprises agglomerated particles. The agglomerated particles were de-agglomerated by a ultrasonication method using a ultrasonic homogenizer having a model name of STH-1500S from Sonictopia. 10 grams of the heated material was added into a 400 mL vessel with 150 mL of distilled water. A ultrasonication was applied to the vessel with a condition of 100% power for 60 minutes to prepare a ultrasonicated slurry. CEX1 was obtained by filtering of the ultrasonicated slurry followed by drying of a filtered wet-powder at 120 ⁰C for 10 hours.

### Comparative Example 2 (CEX2)

A positive electrode active material powder CEX2 was obtained through the same method as CEX1 except that KOH powder (from Sigma-Aldrich) was added in the step 2) Mixing so as to prepare a mixture having a K/(Li+Ni+Mn+Co+K) atomic ratio of 0.025 (2.5 mol%).

### Comparative Example 3 (CEX3)

A positive electrode active material powder CEX3 was obtained through the same method as CEX1 except the heating temperature in the step 3) was 800 ⁰C.

### Example 1 (EX1)

A positive electrode active material powder EX1 was obtained through the same method as CEX3 except that : i) KOH powder (from Sigma-Aldrich) was added in the step 2) Mixing so as to prepare a mixture having a K/(Li+Ni+Mn+Co+K) atomic ratio of 0.025 (1 at%), and ii) the heating temperature in the step 3) was 800 ⁰C.

### Comparative Example 4 (CEX4)

A positive electrode active material powder CEX4 was obtained through the same method as EX1 except the heating temperature in the step 3) was 750 ⁰C.

### Example 2 (EX2)

A positive electrode active material powder EX2 was obtained through the same method as CEX4 except that KOH powder (from Sigma-Aldrich) was added in the step 2) Mixing so as to prepare a mixture having a K/(Li+Ni+Mn+Co+K) atomic ratio of 0.10 (10 at%).

### Comparative Example 5 (CEX5)

A positive electrode active material powder CEX5 was obtained through the same method as CEX2 except a Ni/(Ni+Mn+Co) atomic ratio of 0.60, a Mn/(Ni+Mn+Co) atomic ratio of 0.30, and a Co/(Ni+Mn+Co) atomic ratio of 0.10.

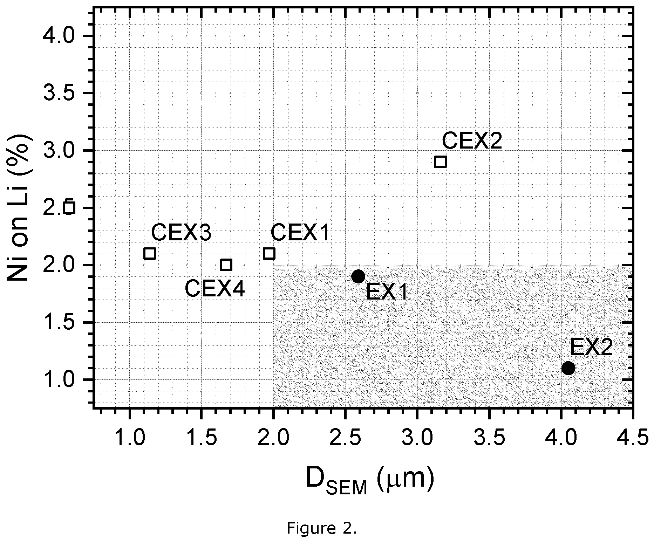

Table 2 provides electrochemical properties of positive electrode active materials according to EXs and CEXs and process conditions related thereto. Figure 2 depicts D_{SEM} (y axis) and cation mixing (x axis) values for each of the EXs and CEXs listed in Table 2.

**Table 2. Electrochemical properties of positive electrode active materials according to EXs and CEXs and process conditions related thereto**

| ID | Atomic ratio* (at%) | | | Atomic ratio** (at%) | Heating Temperature (⁰C) | Particle size distribution | | Primary particle size | D50 / D_{SEM} | Cation mixing |
|---|---|---|---|---|---|---|---|---|---|---|
| | Ni | Mn | Co | K | | D50 (µm) | SPAN | D_{SEM} (µm) | | "Ni on Li" (%) |
| CEX1 | 90 | 5 | 5 | 0 | 850 | 2.79 | 1.50 | 1.97 | 1.42 | 2.1 |
| CEX2 | 90 | 5 | 5 | 2.5 | 850 | 4.10 | 0.95 | 3.16 | 1.30 | 2.9 |
| CEX3 | 90 | 5 | 5 | 0 | 800 | 2.53 | 1.89 | 1.14 | 2.22 | 2.1 |
| **EX1** | 90 | 5 | 5 | 2.5 | 800 | **4.05** | **2.93** | **2.59** | **1.56** | **1.9** |
| CEX4 | 90 | 5 | 5 | 2.5 | 750 | 3.47 | 1.30 | 1.67 | 2.08 | 2.0 |
| **EX2** | 90 | 5 | 5 | 10 | 750 | **4.62** | **1.08** | **4.05** | **1.14** | **1.1** |
| CEX5 | 60 | 30 | 10 | 2.5 | 850 | 5.07 | 1.84 | 0.58 | 8.74 | 2.5 |

| | | | | | | | | | | |
|---|---|---|---|---|---|---|---|---|---|---|
| * Atomic ratio relative to Ni, Mn, and Co ** Atomic ratio relative to Li, Ni, Mn, Co, and K | | | | | | | | | | |

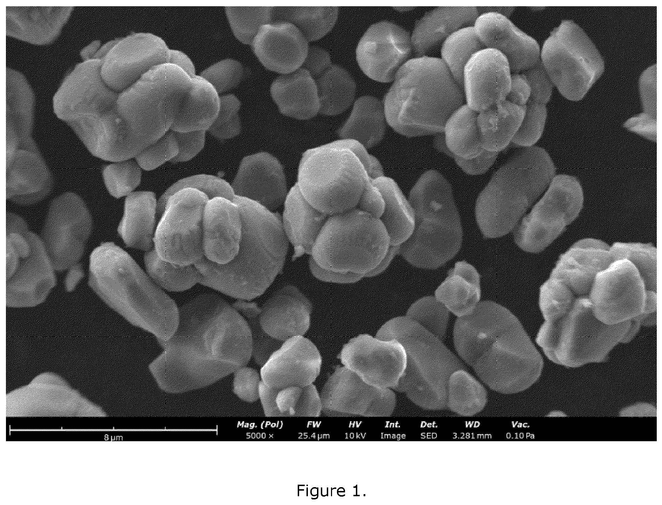

EX1 was prepared by adding 2.5 at% of KOH to a mixture of nickel hydroxide powder, manganese oxide powder, and cobalt oxide powder. The mixture comprising K is then heated at 800°C followed by milling to obtain CAM-1. Figure 1 shows a SEM image of CAM-1. As depicted in figure 1, CAM-1 comprises both single particles and standalone secondary particles with no more than twenty primary particles. CAM-1 has a D50 of more than 4.00 µm and D_{SEM} of more than 2.50 µm along with low cation mixing of no more than .

EX2 was prepared by using 10.0 at% of K in a Ni, Co, and Mn containing mixture and by applying to the mixture a heating temperature of 750 ⁰C. These conditions were enough to prepare a CAM-2 powder having required D50 and D_{SEM} values. Due to a significantly low heating temperature, CAM-2 exhibits a very low Ni on Li cation mixing of 1.1 %.

Figure 2 shows the D_{SEM} and Ni on Li of examples and comparative examples. It is clear that the examples according to this invention have relatively lower Ni on Li values than comparative examples whilst achieving desired relatively high D_{SEM}.

Although CEX1 was prepared with a much higher heating temperature than the one used for EX1 or EX2, CEX1 has a lower D50 and D_{SEM}. It means that 2.5 mol% of K (relative to the sum of Li, Ni, Mn, Co, and K) is much more effective to increase D50 and D_{SEM} than a heating temperature gap of at least 50 ⁰C (EX1 vs. CEX1), which is a significant advantage of the method of the disclosure. Due to a lower heating temperature, EX1 has relatively lower Ni on Li cation mixing. For example, EX1 has a similar D50 as CEX2. However, EX1 has a much lower Ni on Li cation mixing than CEX2.

CEX5 having a Ni/Mn/Co molar ratio of 60/30/10 does not exhibit desired D_{SEM} value with conditions of a relatively high temperature and addition of K compound. It indicates that the use of a K compound with a heating temperature lower than 830°C to achieve a CAM powder with desired D50 and D_{SEM} material is only applicable for a positive electrode active material having a high Ni content (e.g. Ni > 60 at% relative to the sum of Ni, Mn, and Co).

While this disclosure describes several examples, it will be understood by those skilled in the art that various changes can be made and equivalents can be substituted for elements thereof without departing from the scope of the disclosed examples. In addition, many modifications can be made to adapt a particular situation or material to the teachings of this disclosure without departing from the scope thereof. Therefore, it is intended that this disclosure not be limited to the particular examples disclosed as the best mode contemplated for carrying out this disclosure. It should also be understood that the examples disclosed herein should be considered in a descriptive sense only and not for purposes of limitation. Descriptions of features or aspects of each examples should be considered as available for other similar features or aspects of other examples.

## Claims

1. A method for manufacturing a cathode active material powder having a composition comprising Li, O, M, wherein M includes Ni, Mn, and Co, wherein Ni is present in the composition in a content of more than 60.0 at% and of at most 95.0 at%, or of at least 80.0 at% and at most 95.0 at%, or at least 80.0 at% and of at most 90.0 at%, relative to M and as measured by ICP-OES, said method comprising:
- a first step of mixing a Li source and a K source with at least two of : a first source of Ni, a second source of Co, and a third source of Mn, thereby obtaining a first mixture powder comprising K in a content of at least 0.50 at% and of at most 15.00 at% relative to Li, M, and K,
- a second step of heat treating the first mixture powder optionally under oxidizing atmosphere, at a first temperature of at most 830°C, thereby obtaining a first fired material, and
- a third step of milling the first fired material to obtain the cathode active material powder.

2. The method of claim 1, wherein the source of Ni is Ni(OH)₂.

3. The method of claim 1 or 2, wherein the source of Mn is MnO, MnO(OH), Mn₂O₃, Mn₃O₄, or MnO₂.

4. The method of any of the preceding claims, wherein the K source is KOH.

5. The method of any of the preceding claims, wherein the Li source is LiOH.

6. The method of any of the preceding claims, wherein the first temperature is of at least 600°C, or at least 650°C, or at least 700°C.

7. The method of any of the preceding claims, wherein the content of K is of at least 0.70 at%, or of at least 1.50 at%, or of at least 2.00 at%, or of at least 2.50 at%.

8. The method of any of the preceding claims, wherein the content of K is of at most 10.0 at%.

9. The method of any of the preceding claims, wherein the third step of milling the first fired material is performed by ultrasonication.

10. The method of any of the preceding claims, wherein the second step is conducted during a period of time of at least 2.0 hours and of no longer than 15.0 hours.

11. The method of any of the preceding claims, wherein the cathode active material powder comprises :
- Ni in a content x, wherein 60.0 at% ≤ x ≤ 95.0 at%, or 80.0 at% ≤ x ≤ 95.0 at%, or 80.0 at% ≤ x ≤ 90.0 at%, relative to M,
- Mn in a content y, wherein 0.0 at% ≤ y ≤ 20.0 at%, relative to M,
- Co in a content z, wherein 0.0 at% ≤ z ≤ 15.0 at%, relative to M,
- D in a content a, wherein 0.0 at% ≤ a ≤ 5.0 at%, relative to M,
wherein D is an element different than Ni, Mn, and Co and wherein: x+y+z+a is 100.0 at% as determined by ICP-OES.

12. The method of claim 11, wherein: 80.0 at% ≤ x ≤ 90.0 at%, and 0.0 at% ≤ y ≤ 10.0 at%, and 0.0 at% ≤ z ≤ 5.0 at%, and 0.0 at% ≤ a ≤ 5.0 at%.

13. The method of any of the preceding claims, wherein the cathode active material powder includes Ni in a content x of more than 60.0 at%, or of at least 80.0 at% and has :
- a D50/D_{SEM} ratio of at least 1.00 and at most 2.00, and
- a span of at most 1.10,
- a D50 of at least 3.50 µm, and
- a cation mixing of no more than 2.5%, or of at most 2.0%.

14. The method of any of the preceding claims, wherein the cathode active material powder comprises :
- single particles; or
- secondary particles including at least two primary particles and at most twenty primary particles; or
- a combination of single and secondary standalone particles.
